# EUROPEAN PATENT SPECIFICATION

(11) **EP 4 289 326 B1**
(45) Date of publication and mention of the grant of the patent: **27.05.2026**
(21) Application number: 21924348.2
(22) Date of filing: 05.12.2021
(51) Int. Cl.: A47L 11/40, A47L 11/28

(54) **MAINTENANCE BASE STATION AND CLEANING ROBOT SYSTEM**
WARTUNGSBASISSTATION UND REINIGUNGSROBOTERSYSTEM
SYSTÈME DE STATION DE BASE DE MAINTENANCE ET DE ROBOT DE NETTOYAGE

(30) Priority: 05.02.2021 CN 202110163492
(43) Date of publication of application: 13.12.2023
(73) Proprietor: Shenzhen Silver Star Intelligent Group Co., Ltd., Guangdong 518110 (CN)
(72) Inventor: LI, Jun, Shenzhen, Guangdong 518110 (CN); ZHOU, Linlin, Shenzhen, Guangdong 518110 (CN)
(74) Representative: Lewis Silkin LLP
(86) International application number: PCT/CN2021/135568
(87) International publication number: WO 2022/166355

(56) References cited:
- CN-A- 1 628 588
- CN-A- 108 403 020
- CN-A- 108 968 835
- CN-A- 108 968 835
- CN-A- 112 205 930
- CN-A- 112 205 930
- CN-U- 208 114 567
- CN-U- 208 114 567
- CN-U- 211 066 435
- CN-U- 214 906 356
- US-B1- 6 206 980

## Description

### TECHNICAL FIELD

The present application relates to the technical field of cleaning devices, and more particularly to a maintenance base station and a cleaning robot system.

### BACKGROUND

With the development of economy and the improvement of living standards, a variety of cleaning robots are widely used in household cleaning tasks, such as sweeping robots, floor washing robots or glass cleaning robots, etc. In some cases, the maintenance base station can be used to clean and maintain the cleaning robot. However, the current cleaning liquid supply system of the maintenance base station has a single structure and low intelligence, and can only add water or cleaning liquid manually proportioned by the user for cleaning and maintenance.

A patent application CN108968835A disclosed a cleaning tray for a surface cleaning apparatus having a base assembly with a suction nozzle and an agitator. The present invention provides systems and methods for self-cleaning extractors cleaners including vertical or robotic extractor cleaners. In one system, a tray for docking the extractor cleaner during the self-cleaning mode can be provided. The tray may include one or more injectors for injecting a cleaning fluid toward the agitator of the extractor cleaner. In another system, a nozzle flush manifold mounted on a nozzle assembly of the extractor cleaner includes a plurality of dispenser outlets configured to inject the cleaning fluid into a suction passage.

### SUMMARY

An embodiment of the present application provides a cleaning device, in order to solve the technical problem that the current cleaning liquid supply system of the maintenance base station has a single structure and low intelligence, and can only add water or cleaning liquid manually proportioned by the user.

An embodiment of the present application provides a maintenance base station configured for maintaining a cleaning robot, and the maintenance base station includes: a base and a cleaning liquid supply system; the cleaning liquid supply system includes: a first cleaning tank, a second cleaning tank, a pipeline assembly and at least one fluid drive device; the first cleaning tank, the second cleaning tank, and the at least one fluid drive device are mounted on the base; the pipeline assembly is provided with a trunk pipe, a first branch, and a second branch; the trunk pipe is configured for supplying cleaning fluid to the cleaning robot, an end of the first branch is connected with the first cleaning tank, an end of the second branch is connected with the second cleaning tank, an end of the first branch away from the first cleaning tank and an end of the second branch away from the second cleaning tank are connected to an end of the trunk pipe, and the at least one fluid drive device is configured for driving a fluid in the first cleaning tank and a fluid in the second cleaning tank to flow to the first branch and the second branch respectively; and the fluid in the first cleaning tank and the fluid in the second cleaning tank are fully mixed in the trunk pipe to form a certain proportion of cleaning liquid;
the at least one fluid drive device includes a first fluid drive device pneumatically communicated with the first cleaning tank or the first branch, and the first fluid drive device is configured for driving the fluid in the first cleaning tank to flow into the first branch;
the at least one fluid drive device further includes a second fluid drive device pneumatically communicated with the second cleaning tank or the second branch, and the second fluid drive device is configured for driving the fluid in the second cleaning tank to flow into the second branch; and
the maintenance base station includes a control circuit board and a first communication component electrically connected to the control circuit board, the control circuit board is fixed on the base, the control circuit board is electrically connected to the first fluid drive device and the second fluid drive device, and the first communication component is configured for communicating with the cleaning robot to obtain a preset cleaning fluid demand information, the control circuit board determines a first working parameter and a second working parameter according to the preset cleaning fluid demand information received by the first communication component, to control the first fluid drive device according to the first working parameter, and to control the second fluid drive device according to the second working parameter.

An embodiment of the present application provides a cleaning robot system, and the cleaning robot system includes a cleaning robot and the maintenance base station mentioned above.

Compared with the prior art, the first cleaning tank, the second cleaning tank and the at least one fluid drive device are mounted on the base, and the pipeline assembly is provided with the trunk pipe, the first branch and the second branch, the trunk pipe is used to supply a cleaning fluid to the cleaning robot; further, the end of the first branch is connected with the first cleaning tank, the end of the second branch is connected with the second cleaning tank, and the end of the first branch away from the first cleaning tank and an end of the second branch away from the second cleaning tank are connected to an end of the trunk pipe, therefore, the at least one fluid drive device is configured for driving a fluid in the first cleaning tank and a fluid in the second cleaning tank to flow to the first branch and the second branch respectively, and then the fluid are fully mixed in the trunk pipe to form a certain proportion of cleaning liquid. The cleaning liquid supply system of the maintenance base station can automatically provide the cleaning liquid with a certain composition proportion, which is conducive to meeting different degrees of cleaning requirements.

### BRIEF DESCRIPTION OF THE DRAWINGS

One or more embodiments are exemplified by figures in the accompanying drawings corresponding to them, the exemplified description does not constitute a limitation to the embodiments, and elements in the drawings having the same reference numerical label are represented as similar elements, unless specifically stated, the figures in the drawings do not constitute a proportion limitation.
FIG. 1 is a first structural schematic view of a cleaning robot system (corresponding to a first embodiment) provided by the present application;
FIG. 2 is a second structural view of a cleaning robot system (corresponding to a first embodiment) provided by an embodiment of the present application;
FIG. 3 is a structural schematic view of docking between the cleaning robot and the maintenance base station corresponding to FIG. 1;
FIG. 4 is a third structural schematic view of a cleaning robot system (corresponding to a first embodiment) provided by an embodiment of the present application;
FIG. 5 is a fourth structural schematic view of a cleaning robot system (corresponding to a first embodiment) provided by an embodiment of the present application;
FIG. 6 is a fifth structural schematic view of a cleaning robot system (corresponding to a first embodiment) provided by an embodiment of the present application;
FIG. 7 is an explosion schematic view of a maintenance base station corresponding to FIG. 1;
FIG. 8 is a structural schematic view of a hardware structure of a cleaning robot system provided by an embodiment of the present application; and
FIG. 9 is a structural schematic view of a cleaning robot system (corresponding to a second embodiment) provided by an embodiment of the present application.

### DETAILED DESCRIPTION OF EMBODIMENTS

In order to make the purpose, the technical solution and the advantages of the present application be clearer and more understandable, the present application will be further described in detail below with reference to accompanying figures and embodiments. It should be understood that the specific embodiments described herein are merely intended to illustrate but not to limit the present application. Based on the embodiments in the present application, all other embodiments acquired by those skilled in the art without creative labor fall within the scope of protection in the present application.

It should be noted that if there is no conflict, the various features in the embodiments of the present application can be combined with each other and are within the scope of protection of the present application. In addition, although the functional modules are divided in the device diagram and the logical sequence is shown in the flowchart, in some cases the steps shown or described can be performed in a different order than the modules in the device or in the flowchart. Furthermore, the words "first", "second" and "third" used in the present application do not limit the data and the order of execution, but only distinguish the same or similar items with basically the same function and function.

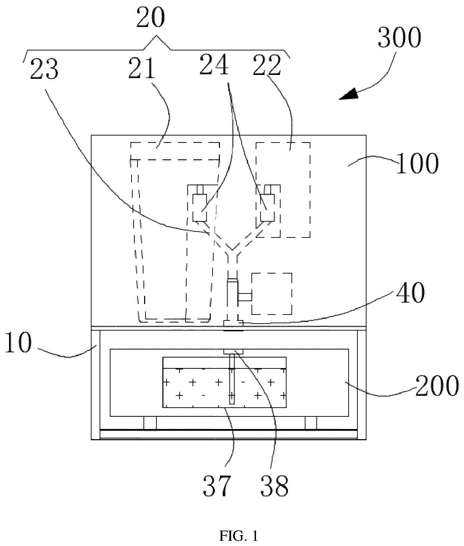

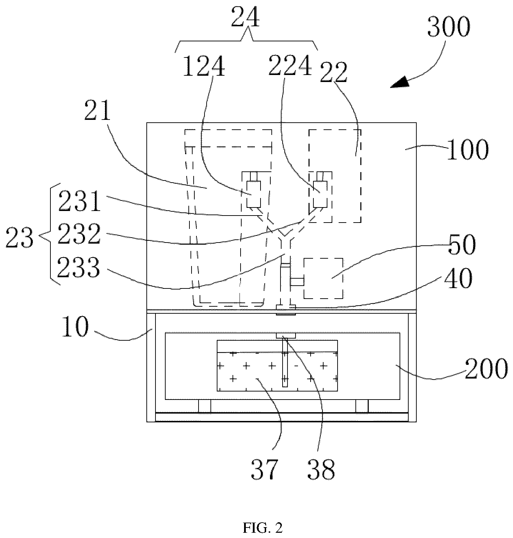

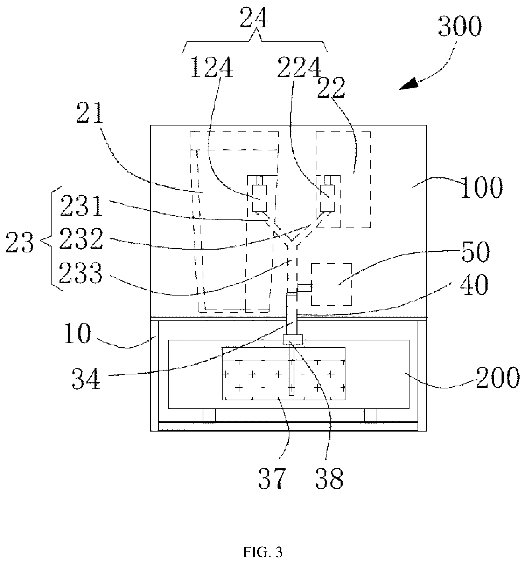

As shown in FIGS. 1 to 3, an embodiment of the present application provides a cleaning robot 200 system, which includes a cleaning robot 200 and a maintenance base station 100.

For the cleaning robot 200 provided in the embodiment of the present application, it is understood that the cleaning robot 200 can be any of a sweeping robot, a robot vacuum and mop combo, or a mopping robot.

As shown in FIGS. 1 to 3, or the maintenance base station 100 provided in the embodiment of the present application, the maintenance base station 100 is used to maintain the cleaning robot 200. The maintenance base station 100 includes a base 10 and a cleaning liquid supply system 20; the cleaning liquid supply system 20 includes a first cleaning tank 21, a second cleaning tank 22, a pipeline assembly 23 and at least one fluid drive device 24; the first cleaning tank 21, the second cleaning tank 22 and the at least one fluid drive device 24 are mounted on the base 10. The pipeline assembly 23 is provided with a trunk pipe 233, a first branch 231 and a second branch 232. The trunk pipe 233 is used to supply cleaning liquid to the cleaning robot 200, an end of the first branch 231 is communicated with the first cleaning tank 21, and an end of the second branch 232 is communicated with the second cleaning tank 22, an end of the first branch 231 away from the first cleaning tank 21 and an end of the second branch 232 away from the second cleaning tank 22 are communicated with an end of the trunk pipe 233. The at least one fluid drive device 24 is used to drive the fluid in the first cleaning tank 21 and the fluid in the second cleaning tank 22 to the first branch 231 and the second branch 232, respectively.

Compared with the prior art, the first cleaning tank 21, the second cleaning tank 22 and the at least one fluid drive device 24 are mounted on the base 10, and the pipeline assembly 23 is provided with the trunk pipe 233, the first branch 231 and the second branch 232, the trunk pipe 233 is used to supply a cleaning fluid to the cleaning robot 200; further, the end of the first branch 231 is communicated with the first cleaning tank 21, the end of the second branch 232 is communicated with the second cleaning tank 22, and the end of the first branch 231 away from the first cleaning tank 21 and an end of the second branch 232 away from the second cleaning tank 22 are connected to an end of the trunk pipe 233, therefore, the at least one fluid drive device 24 is configured for driving a fluid in the first cleaning tank 21 and a fluid in the second cleaning tank 22 to flow to the first branch 231 and the second branch 232 respectively, and then the fluid are fully mixed in the trunk pipe 233 to form a certain proportion of cleaning liquid. The cleaning liquid supply system 20 of the maintenance base station 100 can automatically provide the cleaning liquid with a certain composition proportion, which is conducive to meeting different degrees of cleaning requirements.

The maintenance base station 100 can supply the proportioned cleaning liquid to the cleaning container 37 of the cleaning robot 200 through the cleaning liquid supply system 20.

**In** the embodiment, the maintenance base station 100 further includes a docking mechanism 40 communicating with the trunk pipe 233, the docking mechanism 4 is used for docking with a docking valve 38 of the cleaning robot 200 to establish a fluid passage 34 communicating the cleaning container 37 and the trunk pipe 233. The cleaning robot 200 is provided with a cleaning container 37 and a docking valve 38 pneumatically communicated with the cleaning container 37. When the cleaning robot 200 moves close to the maintenance base station 100, the docking valve 38 of the cleaning robot 200 can be docked and communicated with the docking mechanism 40, to establish a fluid passage 34 between the cleaning container 37 and the trunk pipe 233. The fluid in the first cleaning tank 21 and the second cleaning tank 22 can be transferred to the cleaning container 37 through the fluid passage 34 and driven by the at least one fluid drive device 24.

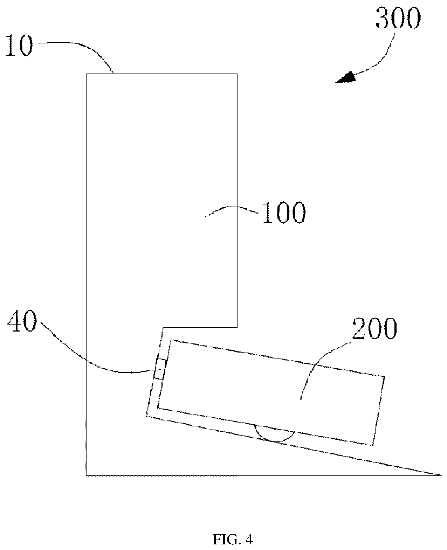

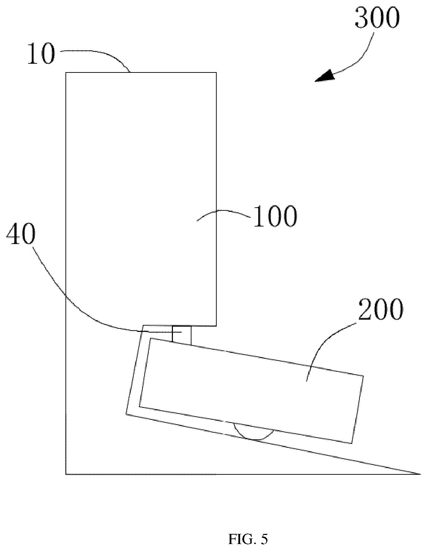

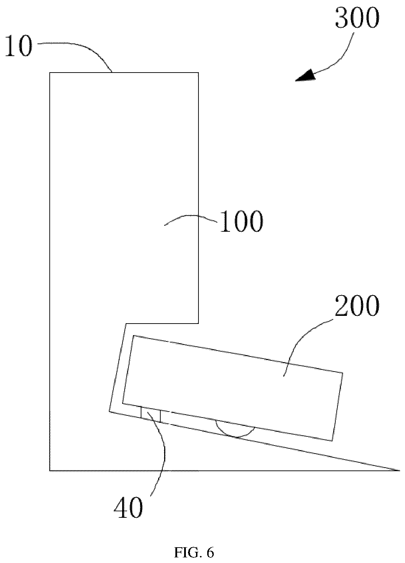

As further shown in FIGS. 4 to 6, the docking mechanism 40 can be arranged on the longitudinal side of the base 10, so that the docking mechanism 40 can be connected to the circumferential side surface of the cleaning robot 200; alternatively, the docking mechanism 40 can also be arranged on a bearing surface of the base 10 (for bearing the cleaning robot), so that the docking mechanism 40 can be connected to the bottom of the cleaning robot 200; alternatively, the docking mechanism 40 can also be arranged on an upper surface (opposite to the bearing surface) of the base 10 , so that the docking mechanism 40 can be connected to the top of the cleaning robot 200.

The docking valve 38 of the cleaning robot 200 can include a port provided with a check valve or a port provided with a movable cover plate to prevent liquid leakage in the cleaning container 37.

As shown in FIGS. 1 to 3, in some embodiments, the docking mechanism 40 is retractably connected to the base 10. The maintenance base station 100 further includes a drive device 50, the drive device 50 is fixed on the base 10, the drive device 50 is connected with the docking mechanism 40, the drive device 50 can drive the docking mechanism 40 relative to the base 10 extension or contraction, the drive device 50 can drive the docking mechanism 40 to extend relative to the base 10 and dock with the cleaning robot 200, or to retract relative to the base 10 to separate from the cleaning robot 200. The drive device 50 can drive the docking mechanism 40 to extend and retract through any one of a rack and pinion mechanism, a screw mechanism and a link mechanism, etc., which is not limited herein.

In some other embodiments, the docking mechanism 40 is fixed on the base 10. By moving the cleaning robot 200 to the preset alignment area, the cleaning robot is actively docked with the docking mechanism 40.

In another embodiment, the maintenance base station 100 can provide a proportioned cleaning liquid to clean and maintain the cleaning component to be cleaned of the cleaning robot 200. In the embodiment, the base 10 is provided with a cleaning tank for receiving the cleaning component to be cleaned of the cleaning robot 200, a part of the trunk pipe 233 is located in the cleaning tank, and the trunk pipe 233 can provide the proportioned cleaning liquid to the cleaning component to be cleaned of the cleaning robot 200, such that the cleaning liquid is fully wet to the cleaning component to be cleaned of the cleaning robot 200, which is conducive to improving the cleaning effect. The cleaning component to be cleaned of the cleaning robot 200 can be a mop, and the cleaning robot 200 can drive the cleaning component to be cleaned to rotate or vibrate or move reciprocally, so that the cleaning component to be cleaned and the scraping component on the maintenance base station 100 can squeeze and friction each other to realize the cleaning effect; alternatively, the maintenance base station 100 is provided with a cleaning device, and the cleaning device can actively clean the cleaning component to be cleaned of the cleaning robot 200 to achieve the cleaning effect.

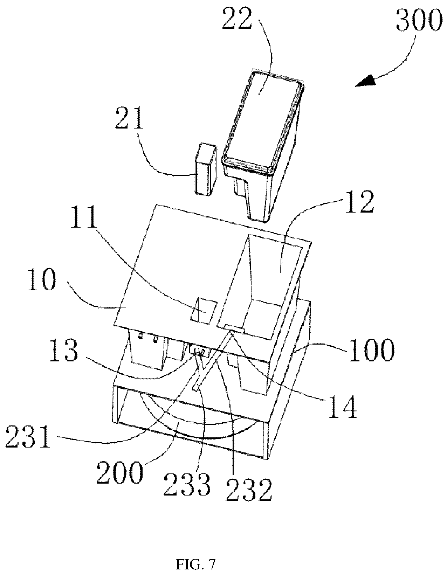

As further shown in FIG. 7, in the embodiment, the first cleaning tank 21 and the second cleaning tank 22 are detachably mounted on the base 10. The base 10 is provided with a first mounting groove 11 and a second mounting groove 12, the first mounting groove 11 is used for accommodating the first cleaning tank 21, the second mounting groove 12 is used for accommodating the second cleaning tank 22, for example, the user can open the clamshell on the base 10, so as to remove the first cleaning tank 21 from the first mounting groove 11 of the base 10, and to remove the second cleaning tank 22 from the second mounting groove 12 of the base 10. In other embodiments, the first cleaning tank 21 can be fixedly connected with the base 10 by means of a screw connection, a snap-fit connection or a pin connection; or the first cleaning tank 21 and the base 10 are integrated; the second cleaning tank 22 can be fixedly connected with the base 10 by means of a screw connection, a snap-fit connection or a pin connection; or the second cleaning tank 22 and the base 10 are integrated.

The first cleaning tank 21 is provided with a first inner cavity and a first liquid inlet and a first liquid outlet that are communicated with the first inner cavity, and the first liquid inlet and the first liquid outlet are arranged penetrating through the inner wall of the first cleaning tank 21, and water, cleaning agent, disinfectant or other types of cleaning solution can be added to the first cleaning tank 21 through the first liquid inlet. The first branch 231 is communicated with the first liquid outlet. A sealing cover or a sealing plug can be mounted at the first liquid inlet.

The second cleaning tank 22 is provided with a second inner cavity and a second liquid inlet and a second liquid outlet that are communicated with the second inner cavity, and the second liquid inlet and the second liquid outlet are arranged penetrating through the inner wall of the second cleaning tank 22, and water, cleaning agent, disinfectant or other types of cleaning solution can be added to the second cleaning tank 22 through the second liquid inlet. The second branch 232 is connected to the second liquid outlet. A sealing cover or a sealing plug can be mounted at the second liquid inlet.

In the embodiment, the volume of the first inner cavity and the volume of the second inner cavity may be the same or different, which is not limited herein.

The position of the base 10 corresponding to the first liquid outlet is provided with a first drainage port 13, and the position of the base 10 corresponding to the second liquid outlet is provided with a second drainage port 14. One end of the first branch 231 is fixedly connected and communicated to the first drainage port 13. The second branch 232 is fixedly connected and communicated to the second drainage port 14. When the first cleaning tank 21 is mounted on the base 10, the first liquid outlet of the first cleaning tank 21 is docked with the first drainage port 13; when the second cleaning tank 22 is mounted on the base 10, the second liquid outlet of the second cleaning tank 22 is docked to the second drainage port 14. It is understood that the sealing ring can be arranged at the joint of the first liquid outlet of the first cleaning tank 21 and the first drainage port 13, and the sealing ring can be arranged at the joint of the second liquid outlet of the second cleaning tank 22 and the second drainage port 14, so as to improve the sealing performance.

The first drainage port 13 is formed on the groove wall of the first mounting groove 11 and is docked with the first cleaning tank 21. The first branch 231 is communicated with the first cleaning tank 21 through the first drainage port 13, and the second drainage port 14 is formed on the groove wall of the second mounting groove 12 and is docked with the second cleaning tank 22. The second branch 232 is communicated to the second cleaning tank 22 through the second discharge port 14.

As shown in FIGS. 1 to 3, in a first embodiment, the at least one fluid drive device 24 includes a first fluid drive device 124, and the first fluid drive device 124 is pneumatically communicated with the first cleaning tank 21 or the first branch 231, and the first fluid drive device 124 is configured for driving the fluid in the first cleaning tank 21 to flow into the first branch 231. The first fluid drive device 124 is a first liquid pumping device, and the first fluid drive device 124 is pneumatically communicated with the first branch 231, the first fluid drive device 124 can be a peristaltic pump or a water pump, and the first fluid body drive device 124 can have a pumping effect on the liquid in the first cleaning tank 21; or the first fluid drive device 124 is a first air pump device, the first fluid drive device 124 is pneumatically communicated with the first cleaning tank 21, and the first fluid drive device 124 can input gas into the first cleaning tank 21 to squeeze the liquid in the first cleaning tank 21 into the first branch 231.

The at least one fluid drive device 24 further includes a second fluid drive device 224, the second fluid drive device 224 is pneumatically communicated with the second cleaning tank 22 or the second branch 232, and the second fluid drive device 224 is configured for driving the fluid in the second cleaning tank 22 to flow into the second branch 232. The second fluid drive device 224 is a second liquid pumping device, and the second fluid drive device 224 is pneumatically communicated with the second branch 232, the second fluid drive device 224 can be a peristaltic pump or a water pump, and the second fluid body drive device 224 can have a pumping effect on the liquid in the second cleaning tank 22; or the second fluid drive device 224 is a second air pump device, the second fluid drive device 224 is pneumatically communicated with the second cleaning tank 22, and the second fluid drive device 224 can input gas into the second cleaning tank 22 to squeeze the liquid in the second cleaning tank 22 into the second branch 232.

The first fluid drive device 124 and the second fluid drive device 224 can work independently, the first flow quantity output by the first cleaning tank 21 to the first branch 231 can be adjusted by adjusting the working parameters of the first fluid drive device 124; and the second flow quantity output by the second cleaning tank 22 to the second branch 232 can be adjusted by adjusting the working parameters of the second fluid drive device 224; since the first flow quantity and the second flow quantity are adjustable, so that the composition ratio of the cleaning liquid provided by the cleaning liquid supply system 20 can be freely adjusted, so as to meet more diverse cleaning requirements.

For example, one of the first cleaning tank 21 and the second cleaning tank 22 is used for storing water, the other is used for storing cleaning agent, and the first flow quantity and the second flow quantity can be adjusted respectively by setting the working parameters of the first fluid drive device 124 and the second fluid drive device 224. Thus, the maintenance base station 100 can self-adjust the ratio of the water and cleaning agent supplied by the cleaning liquid. In other embodiments, one of the first cleaning tank 21 and the second cleaning tank 22 is used for storing a cleaning agent of the first concentration, and the other is used for storing a cleaning agent of the second concentration, and the first concentration and the second concentration are different.

In other embodiments, the fluid drive device 24 can also be one or more, which may be set by those skilled in the field according to actual needs.

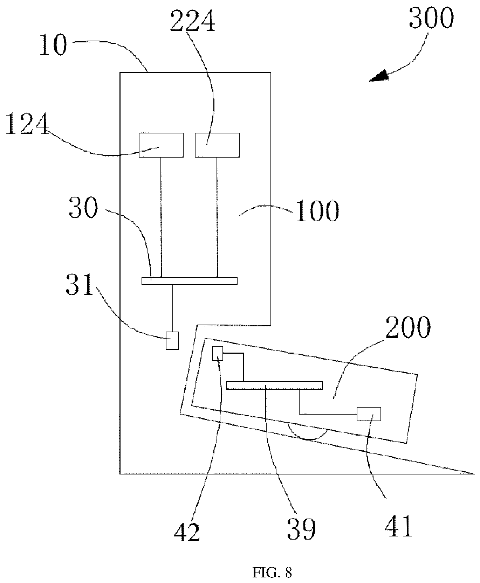

As shown in FIGS. 1 to 3 and 8, in some embodiments, the maintenance base station 100 includes a control circuit board 30 and a first communication component 31 electrically connected to the control circuit board 30, and the control circuit board 30 is electrically connected to the at least one fluid drive device 24; the cleaning robot 200 further includes a controller 39 and a second communication component 42 electrically connected to the controller 39.

When the cleaning robot 200 is docked with the maintenance base station 100, the controller 39 controls the second communication component 42 to send a preset cleaning fluid demand information to the first communication component 31 of the maintenance base station 100, and the control circuit board 30 determines the working parameters according to the preset cleaning fluid demand information received by the first communication component 31, and controls the work of at least one fluid drive device 24 according to the working parameters, so as to realize that the maintenance base station 100 can reasonably supply the cleaning robot 200 with an appropriate dose of cleaning liquid, which can avoid the situation of too much or too little supply and can effectively improve the supply efficiency.

The first communication component 31 can include one or more selected from a WiFi module, a Bluetooth module, a Zigbee module, an infrared sensor, a Radio Frequency Identification(RFID) module, and 2G/3G/4G/4G/5G modules, etc.

The second communication component 42 can include one or more selected from a WiFi module, a Bluetooth module, a Zigbee module, an infrared sensor, a Radio Frequency Identification(RFID) module, and 2G/3G/4G/4G/5G modules, etc.

As shown in FIGS. 1 to 3 and 8, in the embodiment, the control circuit board 30 is fixed on the base 10, the control circuit board 30 is electrically connected to the first fluid drive device 124 and the second fluid drive device 224, and the first communication component 31 is used to communicate with the cleaning robot 200 to obtain preset a cleaning fluid demand information. The control circuit board 30 determines the first working parameter and the second working parameter according to the preset cleaning fluid demand information received by the first communication component 31, controls the work of the first-fluid drive device 124 according to the first working parameter, and controls the work of the second fluid drive device 224 according to the second working parameter. When the cleaning robot 200 moves to be docked the maintenance base station 100, the control circuit board 30 determines the first working parameter and the second working parameter based on the preset cleaning fluid demand information. The first working parameter is used to instruct the fluid of the first flow rate of output by the first cleaning tank 21 to the first branch 231 under driven of the first fluid drive device 124, the second working parameter is used to instruct the second flow rate of output by the second cleaning tank 22 to the second branch 232 under driven of the second fluid drive device 224, the fluid of the first flow rate and the fluid of the second flow rate are mixed in the trunk pipe 233, so that a cleaning fluid matching the preset cleaning fluid demand information can be provided to the cleaning robot 200.

In other embodiments, the control circuit board 30 controls only a single fluid drive device 24 for fluid supply.

In some embodiments, the user can set the preset cleaning liquid demand information on the software interface of an intelligent terminal (a smart phone, a smart tablet or a laptop computer, etc.). The preset cleaning liquid demand information can include any one or more combinations of cleaning liquid demand, cleaning liquid composition ratio and cleaning requirements, and the preset cleaning liquid demand information is then sent to the cleaning robot 200 through wireless network. The cleaning robot 200 can send the preset cleaning fluid demand information to the maintenance base station 100 through the first communication component 31, so that the maintenance base station 100 can automatically configure the cleaning fluid according to the preset cleaning fluid demand information. For example, the user can set the preset cleaning liquid demand information including deep cleaning requirements on the software interface of the intelligent terminal, and the preset cleaning liquid demand information can instruct the maintenance base station 100 to configure the first concentration of cleaning liquid for the cleaning task of cleaning robot 200, so as to achieve the effect of deep cleaning. Alternatively, the user can set the preset cleaning fluid demand information including moderate cleaning requirements on the software interface of the intelligent terminal, and the preset cleaning fluid demand information can instruct the maintenance base station 100 to configure a second concentration of cleaning fluid for the cleaning task of cleaning robot 200, where the second concentration is less than the first concentration. Alternatively, the user can set the preset cleaning fluid demand information including light cleaning requirements on the software interface of the intelligent terminal, and the preset cleaning fluid demand information can instruct the maintenance base station 100 to configure a third concentration of cleaning fluid for the cleaning task of cleaning robot 200, where the third concentration is less than the second concentration. In this way, the residual amount of cleaning liquid in the environment can be reduced, and the cleaning requirements can be met.

As shown in FIGS. 1 to 3 and 8, in some other embodiments, the cleaning robot 200 can set the preset cleaning fluid demand information automatically. The cleaning robot 200 includes a water quantity detection device 41, and the water quantity detection device 41 is used to detect the water quantity state of the cleaning container 37, and then the cleaning robot 200 determines the preset cleaning liquid demand information according to the detection signal of the water quantity detection device 41. For example, if the water quantity detection device 41 detects that the cleaning container 37 is in a water-free state, the cleaning robot 200 can determine that the amount of cleaning fluid replenishment in the preset cleaning fluid demand information is the capacity of the cleaning container 37; when the water quantity detection device 41 detects that the cleaning container 37 is in a half-full state, the cleaning robot 200 can determine that the cleaning fluid replenishment in the preset cleaning fluid demand information is half of the capacity of the cleaning container 37. The water quantity detection device 41 can include any one of a capacitive water quantity detection device 41, an inductive water quantity detection device 41 and an electrode water quantity detection device 41.

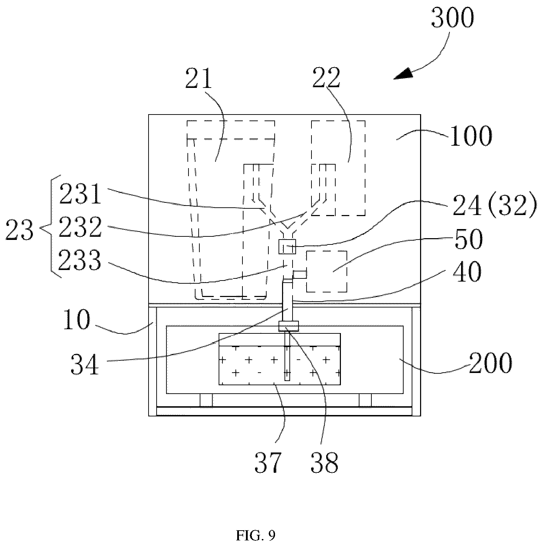

As shown in FIG. 9, in a second embodiment, the at least one fluid drive device 24 includes a liquid pumping device 32, the liquid pumping device 32 is pneumatically communicated to the trunk pipe 233. The liquid pumping device 32 is used to drive the fluid in the first cleaning tank 21 and the fluid in the second cleaning tank 22 to flow to the first branch 231 and the second branch 232 respectively, and the ratio of the cross section area of the first branch 231 to the cross section area of the second branch 232 meets the preset cleaning fluid flow rate ratio. The liquid pumping device 32 can be a peristaltic pump or a water pump, and the liquid pumping device may produce a pumping effect through the liquid in the first cleaning tank 21 and the liquid in the second cleaning tank 22, so that the liquid in the first cleaning tank 21 enters the first branch 231, and the liquid in the second cleaning tank 22 enters the second branch 232.

## Claims

1. A maintenance base station (100), configured for maintaining a cleaning robot (200), and comprising:
a base (10); and
a cleaning liquid supply system (20), comprising: a first cleaning tank (21), a second cleaning tank (22), a pipeline assembly (23) and at least one fluid drive device (24);
wherein the first cleaning tank (21), the second cleaning tank (22), and the at least one fluid drive device (24) are mounted on the base (10); the pipeline assembly (23) is provided with a trunk pipe (233), a first branch (231), and a second branch (232); the trunk pipe (233) is configured for supplying cleaning fluid to the cleaning robot (200), an end of the first branch (231) is connected with the first cleaning tank (21), an end of the second branch (232) is connected with the second cleaning tank (22), an end of the first branch (231) away from the first cleaning tank (21) and an end of the second branch (232) away from the second cleaning tank (22) are connected to an end of the trunk pipe (233), and the at least one fluid drive device (24) is configured for driving a fluid in the first cleaning tank (21) and a fluid in the second cleaning tank (22) to flow into the first branch (231) and the second branch (232) respectively; and the fluid in the first cleaning tank (21) and the fluid in the second cleaning tank (22) are fully mixed in the trunk pipe (233) to form a certain proportion of cleaning liquid;
**characterized in that**
the at least one fluid drive device (24) comprises a first fluid drive device (124) pneumatically communicated with the first cleaning tank (21) or the first branch (231), and the first fluid drive device (124) is configured for driving the fluid in the first cleaning tank (21) to flow into the first branch (231);
wherein the at least one fluid drive device (24) further comprises a second fluid drive device (224) pneumatically communicated with the second cleaning tank (22) or the second branch (232), and the second fluid drive device (224) is configured for driving the fluid in the second cleaning tank (22) to flow into the second branch (232); and
wherein the maintenance base station (100) further comprises a control circuit board (30) and a first communication component (31) electrically connected to the control circuit board (30), the control circuit board (30) is fixed on the base, the control circuit board (30) is electrically connected to the first fluid drive device (124) and the second fluid drive device (224), and the first communication component (31) is configured for communicating with the cleaning robot (200) to obtain a preset cleaning fluid demand information, the control circuit board (30) determines a first working parameter and a second working parameter according to the preset cleaning fluid demand information received by the first communication component (31), to control the first fluid drive device (124) according to the first working parameter, and to control the second fluid drive device (224) according to the second working parameter.

2. The maintenance base station (100) according to claim 1, wherein the first fluid drive device (124) is a first liquid pumping device, and the first fluid drive device (124) pneumatically communicated with the first branch (231), or the first fluid drive device (124) is a first air pump device, and the first fluid drive device (124) is pneumatically communicated with the first cleaning tank (21).

3. The maintenance base station (100) according to claim 1, wherein the second fluid drive device (224) is a second liquid pumping device, and the second fluid drive device (224) pneumatically communicated with the second branch (232), or the second fluid drive device (224) is a second air pump device, and the second fluid drive device (224) is pneumatically communicated with the second cleaning tank (22).

4. The maintenance base station (100) according to claim 1, wherein the at least one fluid drive device (24) comprises a liquid pumping device pneumatically communicated with the trunk pipe (233), and the liquid pumping device is configured for driving the fluid in the first cleaning tank (21) and the fluid in the second cleaning tank (22) to respectively flow into the first branch (231) and the second branch (232), a ratio of a cross section area of the first branch (231) to a cross section area of the second branch (232) meets a preset cleaning fluid flow rate ratio.

5. The maintenance base station (100) according to claim 1, wherein the base is provided with a first mounting groove (11) and a second mounting groove (12), the first cleaning tank (21) and the second cleaning tank (22) are respectively detachably mounted in the first mounting groove (11) and the second mounting groove (12), a first drainage port (13) is formed on a groove wall of the first mounting groove (11) and communicated with the first cleaning tank (21), and the first branch (231) is communicated with the first cleaning tank (21) through the first drainage port (13); a second drainage port (14) is formed on a groove wall of the second mounting groove (12) and communicated with the second cleaning tank (22), and the second branch (232) is communicated with the second cleaning tank (22) through the second drainage port (14).

6. A cleaning robot (200) system, comprising a cleaning robot (200) and a maintenance base station (100); wherein the maintenance base station (100) is configured for maintaining a cleaning robot (200) and comprises:
a base (10); and
a cleaning liquid supply system (20), comprising: a first cleaning tank (21), a second cleaning tank (22), a pipeline assembly (23) and at least one fluid drive device (24);
wherein the first cleaning tank (21), the second cleaning tank (22), and the at least one fluid drive device (24) are mounted on the base (10); the pipeline assembly (23) is provided with a trunk pipe (233), a first branch (231), and a second branch (232); the trunk pipe (233) is configured for supplying cleaning fluid to the cleaning robot (200), an end of the first branch (231) is connected with the first cleaning tank (21), an end of the second branch (232) is connected with the second cleaning tank (22), an end of the first branch (231) away from the first cleaning tank (21) and an end of the second branch (232) away from the second cleaning tank (22) are connected to an end of the trunk pipe (233), and the at least one fluid drive device (24) is configured for driving a fluid in the first cleaning tank (21) and a fluid in the second cleaning tank (22) to flow into the first branch (231) and the second branch (232) respectively; and the fluid in the first cleaning tank (21) and the fluid in the second cleaning tank (22) are fully mixed in the trunk pipe (233) to form a certain proportion of cleaning liquid;
**characterized in that**
the maintenance base station (100) comprises a control circuit board (30) and a first communication component (31) electrically connected to the control circuit board (30), and the control circuit board (30) is electrically connected to the at least one fluid drive device (24);
the cleaning robot (200) further comprises a controller (39) and a second communication component (42) electrically connected to the controller (39); and
when the cleaning robot (200) is docked with the maintenance base station (100), the controller (39) controls the second communication component (42) to send a preset cleaning fluid demand information to the first communication component (31) of the maintenance base station (100), and the control circuit board (30) determines a working parameter according to the preset cleaning fluid demand information received by the first communication component (31), and controls working of the at least one fluid drive device (24) according to the working parameter;
wherein the at least one fluid drive device (24) comprises a first fluid drive device (124) and a second fluid drive device (224), the first fluid drive device (124) is pneumatically communicated with the first cleaning tank (21) or the first branch (231), the second fluid drive device (224) is pneumatically communicated with the second cleaning tank (22) or the second branch (232), the control circuit board (30) determines a first working parameter and a second working parameter according to the preset cleaning fluid demand information received by the first communication component (31), controls the first fluid drive device (124) according to the first working parameter, and controls the second fluid drive device (224) according to the second working parameter.

7. The cleaning robot (200) system according to claim 6, wherein the cleaning robot (200) is provided with a cleaning container (37) and a docking valve (38) pneumatically communicated with the cleaning container (37), and the docking valve (38) is configured for communicating with the trunk pipe (233) of the maintenance base station (100).

8. The cleaning robot (200) system according to claim 6, wherein the cleaning robot (200) further comprises a water quantity detection device (41) electrically connected to the controller (39), the water quantity detection device (41) is configured for detecting a water quantity state of the cleaning container (37), and the controller (39) determines the preset cleaning liquid demand information according to a detection signal of the water quantity detection device (41).

9. The cleaning robot (200) system according to claim 6, wherein the preset cleaning liquid demand information includes light cleaning requirements, moderate cleaning requirements or deep cleaning requirements,
when the preset cleaning liquid demand information is set including deep cleaning requirements, the preset cleaning fluid demand information can instruct the maintenance base station to configure a first concentration of cleaning fluid for the cleaning task of cleaning robot;
when the preset cleaning liquid demand information is set including moderate cleaning requirements, the preset cleaning fluid demand information can instruct the maintenance base station to configure a second concentration of cleaning fluid for the cleaning task of cleaning robot,
when the preset cleaning liquid demand information is set including light cleaning requirements, the preset cleaning fluid demand information can instruct the maintenance base station to configure a third concentration of cleaning fluid for the cleaning task of cleaning robot,
and the second concentration is less than the first concentration, the third concentration is less than the second concentration.

10. The cleaning robot (200) system according to claim 6, wherein the cleaning robot (200) is provided with a cleaning container (37) and a docking valve (38) pneumatically communicated with the cleaning container (37); the maintenance base station (100) further comprises a docking mechanism (40) communicated with the trunk pipe (233), and the docking mechanism (40) is configured for docking with the docking valve (38) of the cleaning robot (200) to establish a fluid passage (34) communicating the cleaning container (37) and the trunk pipe (233).

## Patentansprüche

1. Wartungsbasisstation (100), die zum Warten eines Reinigungsroboters (200) konfiguriert ist und Folgendes umfasst:
eine Basis (10); und
ein Reinigungsflüssigkeits-Zuführsystem (20), das Folgendes umfasst: einen ersten Reinigungsbehälter (21), einen zweiten Reinigungsbehälter (22), eine Rohrleitungsanordnung (23) und mindestens eine Fluidantriebsvorrichtung (24);
wobei der erste Reinigungsbehälter (21), der zweite Reinigungsbehälter (22) und die mindestens eine Fluidantriebsvorrichtung (24) an der Basis (10) angebracht sind; die Rohrleitungsanordnung (23) mit einem Stammrohr (233), einem ersten Zweig (231) und einem zweiten Zweig (232) versehen ist; das Stammrohr (233) zum Zuführen von Reinigungsfluid zum Reinigungsroboter (200) konfiguriert ist, ein Ende des ersten Zweigs (231) mit dem ersten Reinigungsbehälter (21) verbunden ist, ein Ende des zweiten Zweigs (232) mit dem zweiten Reinigungsbehälter (22) verbunden ist, ein Ende des ersten Zweigs (231), das vom ersten Reinigungsbehälter (21) entfernt ist, und ein Ende des zweiten Zweigs (232), das vom zweiten Reinigungsbehälter (22) entfernt ist, mit einem Ende des Stammrohrs (233) verbunden sind und die mindestens eine Fluidantriebsvorrichtung (24) zum Antreiben eines Fluids im ersten Reinigungsbehälter (21) und eines Fluids im zweiten Reinigungsbehälter (22), derart, dass sie in den ersten Zweig (231) bzw. in den zweiten Zweig (232) strömen, konfiguriert ist; und das Fluid im ersten Reinigungsbehälter (21) und das Fluid im zweiten Reinigungsbehälter (22) im Stammrohr (233) vollständig vermischt werden, derart, dass ein bestimmtes Mengenverhältnis der Reinigungsflüssigkeit gebildet wird;
**dadurch gekennzeichnet, dass**
die mindestens eine Fluidantriebsvorrichtung (24) eine erste Fluidantriebsvorrichtung (124) umfasst, die mit dem ersten Reinigungsbehälter (21) oder dem ersten Zweig (231) pneumatisch verbunden ist, und die erste Fluidantriebsvorrichtung (124) zum Antreiben des Fluids im ersten Reinigungsbehälter (21), derart, dass es in den ersten Zweig (231) strömt, konfiguriert ist;
wobei die mindestens eine Fluidantriebsvorrichtung (24) ferner eine zweite Fluidantriebsvorrichtung (224) umfasst, die mit dem zweiten Reinigungsbehälter (22) oder dem zweiten Zweig (232) pneumatisch verbunden ist, und die zweite Fluidantriebsvorrichtung (224) zum Antreiben des Fluids im zweiten Reinigungsbehälter (22), derart, dass es in den zweiten Zweig (232) strömt, konfiguriert ist; und
wobei die Wartungsbasisstation (100) ferner eine Steuerschaltungsleiterplatte (30) und eine erste Kommunikationskomponente (31), die mit der Steuerschaltungsleiterplatte (30) elektrisch verbunden ist, umfasst, die Steuerschaltungsleiterplatte (30) auf der Basis befestigt ist, die Steuerschaltungsleiterplatte (30) mit der ersten Fluidantriebsvorrichtung (124) und der zweiten Fluidantriebsvorrichtung (224) elektrisch verbunden ist und die erste Kommunikationskomponente (31) zum Kommunizieren mit dem Reinigungsroboter (200), um vorgegebene Reinigungsfluid-Bedarfsinformationen zu erhalten, konfiguriert ist, die Steuerschaltungsleiterplatte (30) einen ersten Arbeitsparameter und einen zweiten Arbeitsparameter gemäß den vorgegebenen Reinigungsfluid-Bedarfsinformationen, die durch die erste Kommunikationskomponente (31) empfangen werden, bestimmt, um die erste Fluidantriebsvorrichtung (124) gemäß dem ersten Arbeitsparameter zu steuern und die zweite Fluidantriebsvorrichtung (224) gemäß dem zweiten Arbeitsparameter zu steuern.

2. Wartungsbasisstation (100) nach Anspruch 1, wobei die erste Fluidantriebsvorrichtung (124) eine erste Flüssigkeitspumpvorrichtung ist und die erste Fluidantriebsvorrichtung (124) mit dem ersten Zweig (231) pneumatisch verbunden ist oder die erste Fluidantriebsvorrichtung (124) eine erste Luftpumpvorrichtung ist und die erste Fluidantriebsvorrichtung (124) mit dem ersten Reinigungsbehälter (21) pneumatisch verbunden ist.

3. Wartungsbasisstation (100) nach Anspruch 1, wobei die zweite Fluidantriebsvorrichtung (224) eine zweite Flüssigkeitspumpvorrichtung ist und die zweite Fluidantriebsvorrichtung (224) mit dem zweiten Zweig (232) pneumatisch verbunden ist oder die zweite Fluidantriebsvorrichtung (224) eine zweite Luftpumpvorrichtung ist und die zweite Fluidantriebsvorrichtung (224) mit dem zweiten Reinigungsbehälter (22) pneumatisch verbunden ist.

4. Wartungsbasisstation (100) nach Anspruch 1, wobei die mindestens eine Fluidantriebsvorrichtung (24) eine Flüssigkeitspumpvorrichtung umfasst, die mit dem Stammrohr (233) pneumatisch verbunden ist, und die Flüssigkeitspumpvorrichtung zum Antreiben des Fluids im ersten Reinigungsbehälter (21) und des Fluids im zweiten Reinigungsbehälter (22), derart, dass sie in den ersten Zweig (231) bzw. in den zweiten Zweig (232) strömen, konfiguriert ist, wobei ein Verhältnis eines Querschnittsflächeninhalts des ersten Zweigs (231) zu einem Querschnittsflächeninhalt des zweiten Zweigs (232) ein vorgegebenes Durchflussmengenverhältnis des Reinigungsfluids erfüllt.

5. Wartungsbasisstation (100) nach Anspruch 1, wobei die Basis mit einer ersten Montagenut (11) und einer zweiten Montagenut (12) versehen ist, der erste Reinigungsbehälter (21) und der zweite Reinigungsbehälter (22) in der ersten Montagenut (11) bzw. der zweiten Montagenut (12) lösbar angebracht sind; eine erste Ablauföffnung (13) auf einer Nutwand der ersten Montagenut (11) gebildet ist und mit dem ersten Reinigungsbehälter (21) verbunden ist und der erste Zweig (231) durch die erste Ablauföffnung (13) mit dem ersten Reinigungsbehälter (21) verbunden ist; eine zweite Ablauföffnung (14) auf einer Nutwand der zweiten Montagenut (12) gebildet ist und mit dem zweiten Reinigungsbehälter (22) verbunden ist und der zweite Zweig (232) durch die zweite Ablauföffnung (14) mit dem zweiten Reinigungsbehälter (22) verbunden ist.

6. System für einen Reinigungsroboter (200), das einen Reinigungsroboter (200) und eine Wartungsbasisstation (100) umfasst, wobei die Wartungsbasisstation (100) zum Warten eines Reinigungsroboters (200) konfiguriert ist und Folgendes umfasst:
eine Basis (10); und
ein Reinigungsflüssigkeits-Zuführsystem (20), das Folgendes umfasst: einen ersten Reinigungsbehälter (21), einen zweiten Reinigungsbehälter (22), eine Rohrleitungsanordnung (23) und mindestens eine Fluidantriebsvorrichtung (24);
wobei der erste Reinigungsbehälter (21), der zweite Reinigungsbehälter (22) und die mindestens eine Fluidantriebsvorrichtung (24) auf der Basis (10) angebracht sind; die Rohrleitungsanordnung (23) mit einem Stammrohr (233), einem ersten Zweig (231) und einem zweiten Zweig (232) versehen ist; das Stammrohr (233) zum Zuführen von Reinigungsfluid zum Reinigungsroboter (200) konfiguriert ist, ein Ende des ersten Zweigs (231) mit dem ersten Reinigungsbehälter (21) verbunden ist, ein Ende des zweiten Zweigs (232) mit dem zweiten Reinigungsbehälter (22) verbunden ist, ein Ende des ersten Zweigs (231), das vom ersten Reinigungsbehälter (21) entfernt ist, und ein Ende des zweiten Zweigs (232), das vom zweiten Reinigungsbehälter (22) entfernt ist, mit einem Ende des Stammrohrs (233) verbunden sind und die mindestens eine Fluidantriebsvorrichtung (24) zum Antreiben eines Fluids im ersten Reinigungsbehälter (21) und eines Fluids im zweiten Reinigungsbehälter (22), derart, dass sie in den ersten Zweig (231) bzw. in den zweiten Zweig (232) strömen, konfiguriert ist; und das Fluid im ersten Reinigungsbehälter (21) und das Fluid im zweiten Reinigungsbehälter (22) im Stammrohr (233) vollständig vermischt werden, derart, dass ein bestimmtes Mengenverhältnis der Reinigungsflüssigkeit gebildet wird;
**dadurch gekennzeichnet, dass**
die Wartungsbasisstation (100) eine Steuerschaltungsleiterplatte (30) und eine erste Kommunikationskomponente (31), die mit der Steuerschaltungsleiterplatte (30) elektrisch verbunden ist, umfasst und die Steuerschaltungsleiterplatte (30) mit der mindestens einen Fluidantriebsvorrichtung (24) elektrisch verbunden ist;
der Reinigungsroboter (200) ferner eine Steuereinheit (39) und eine zweite Kommunikationskomponente (42), die mit der Steuereinheit (39) elektrisch verbunden ist, umfasst; und
dann, wenn der Reinigungsroboter (200) an der Wartungsbasisstation (100) angedockt ist, die Steuereinheit (39) die zweite Kommunikationskomponente (42) steuert, vorgegebene Reinigungsfluid-Bedarfsinformationen an die erste Kommunikationskomponente (31) der Wartungsbasisstation (100) zu senden, und die Steuerschaltungsleiterplatte (30) einen Arbeitsparameter gemäß den vorgegebenen Reinigungsfluid-Bedarfsinformationen, die durch die erste Kommunikationskomponente (31) empfangen werden, bestimmt und das Arbeiten der mindestens einen Fluidantriebsvorrichtung (24) gemäß dem Arbeitsparameter steuert;
wobei die mindestens eine Fluidantriebsvorrichtung (24) eine erste Fluidantriebsvorrichtung (124) und eine zweite Fluidantriebsvorrichtung (224) umfasst, die erste Fluidantriebsvorrichtung (124) mit dem ersten Reinigungsbehälter (21) oder dem ersten Zweig (231) pneumatisch verbunden ist, die zweite Fluidantriebsvorrichtung (224) mit dem zweiten Reinigungsbehälter (22) oder dem zweiten Zweig (232) pneumatisch verbunden ist, die Steuerschaltungsleiterplatte (30) einen ersten Arbeitsparameter und einen zweiten Arbeitsparameter gemäß den vorgegebenen Reinigungsfluid-Bedarfsinformationen, die durch die erste Kommunikationskomponente (31) empfangen werden, bestimmt, die erste Fluidantriebsvorrichtung (124) gemäß dem ersten Arbeitsparameter steuert und die zweite Fluidantriebsvorrichtung (224) gemäß dem zweiten Arbeitsparameter steuert.

7. System für einen Reinigungsroboter (200) nach Anspruch 6, wobei der Reinigungsroboter (200) mit einem Reinigungsbehälter (37) und einem Andockventil (38), das mit dem Reinigungsbehälter (37) pneumatisch verbunden ist, versehen ist und das Andockventil (38) zum Verbinden mit dem Stammrohr (233) der Wartungsbasisstation (100) konfiguriert ist.

8. System für einen Reinigungsroboter (200) nach Anspruch 6, wobei der Reinigungsroboter (200) ferner eine Wassermengen-Detektionsvorrichtung (41) umfasst, die mit der Steuereinheit (39) elektrisch verbunden ist, die Wassermengen-Detektionsvorrichtung (41) zum Detektieren eines Wassermengenzustands des Reinigungsbehälters (37) konfiguriert ist und die Steuereinheit (39) die vorgegebenen Reinigungsflüssigkeits-Bedarfsinformationen gemäß einem Detektionssignal der Wassermengen-Detektionsvorrichtung (41) bestimmt.

9. System für einen Reinigungsroboter (200) nach Anspruch 6, wobei die vorgegebenen Reinigungsflüssigkeits-Bedarfsinformationen Anforderungen für eine leichte Reinigung, Anforderungen für eine moderate Reinigung oder Anforderungen für eine Tiefenreinigung enthalten,
dann, wenn die vorgegebenen Reinigungsflüssigkeits-Bedarfsinformationen eingestellt sind, die Anforderungen für eine Tiefenreinigung enthalten, die vorgegebenen Reinigungsfluid-Bedarfsinformationen die Wartungsbasisstation anweisen können, eine erste Konzentration des Reinigungsfluids für die Reinigungsaufgabe des Reinigungsroboters zu konfigurieren,
dann, wenn die vorgegebenen Reinigungsflüssigkeits-Bedarfsinformationen eingestellt sind, die Anforderungen für eine moderate Reinigung enthalten, die vorgegebenen Reinigungsfluid-Bedarfsinformationen die Wartungsbasisstation anweisen können, eine zweite Konzentration des Reinigungsfluids für die Reinigungsaufgabe des Reinigungsroboters zu konfigurieren,
dann, wenn die vorgegebenen Reinigungsflüssigkeits-Bedarfsinformationen eingestellt sind, die Anforderungen für eine leichte Reinigung enthalten, die vorgegebenen Reinigungsfluid-Bedarfsinformationen die Wartungsbasisstation anweisen können, eine dritte Konzentration des Reinigungsfluids für die Reinigungsaufgabe des Reinigungsroboters zu konfigurieren,
und die zweite Konzentration geringer als die erste Konzentration ist und die dritte Konzentration geringer als die zweite Konzentration ist.

10. System für einen Reinigungsroboter (200) nach Anspruch 6, wobei der Reinigungsroboter (200) mit einem Reinigungsbehälter (37) und einem Andockventil (38), das mit dem Reinigungsbehälter (37) pneumatisch verbunden ist, versehen ist; die Wartungsbasisstation (100) ferner einen Andockmechanismus (40) umfasst, der mit dem Stammrohr (233) verbunden ist, und der Andockmechanismus (40) zum Andocken mit dem Andockventil (38) des Reinigungsroboters (200), um einen Fluidkanal (34) einzurichten, der den Reinigungsbehälter (37) und das Stammrohr (233) verbindet, konfiguriert ist.

## Revendications

1. Station de base de maintenance (100), configurée pour entretenir un robot de nettoyage (200), et comprenant :
une base (10) ; et
un système d'alimentation en liquide de nettoyage (20), comprenant : un premier réservoir de nettoyage (21), un second réservoir de nettoyage (22), un ensemble conduite (23) et au moins un dispositif d'entraînement de fluide (24) ;
dans laquelle le premier réservoir de nettoyage (21), le second réservoir de nettoyage (22) et le ou les dispositifs d'entraînement de fluide (24) sont montés sur la base (10) ; l'ensemble conduite (23) est muni d'un tuyau principal (233), d'une première branche (231) et d'une seconde branche (232) ; le tuyau principal (233) est configuré pour fournir un fluide de nettoyage au robot de nettoyage (200), une extrémité de la première branche (231) est reliée au premier réservoir de nettoyage (21),
une extrémité de la seconde branche (232) est reliée au second réservoir de nettoyage (22), une extrémité de la première branche (231) éloignée du premier réservoir de nettoyage (21) et une extrémité de la seconde branche (232) éloignée du second réservoir de nettoyage (22) sont reliées à une extrémité du tuyau principal (233), et le ou les dispositifs d'entraînement de fluide (24) sont configurés pour entraîner un fluide dans le premier réservoir de nettoyage (21) et un fluide dans le second réservoir de nettoyage (22) à circuler dans la première branche (231) et dans la seconde branche (232) respectivement ; et le fluide dans le premier réservoir de nettoyage (21) et le fluide dans le second réservoir de nettoyage (22) sont complètement mélangés dans le tuyau principal (233) pour former une certaine proportion de liquide de nettoyage ; **caractérisée en ce que**
le ou les dispositifs d'entraînement de fluide (24) comprennent un premier dispositif d'entraînement de fluide (124) en communication pneumatique avec le premier réservoir de nettoyage (21) ou la première branche (231), et le premier dispositif d'entraînement de fluide (124) est configuré pour entraîner le fluide dans le premier réservoir de nettoyage (21) à circuler dans la première branche (231) ;
dans laquelle le ou les dispositifs d'entraînement de fluide (24) comprennent en outre un second dispositif d'entraînement de fluide (224) en communication pneumatique avec le second réservoir de nettoyage (22) ou la seconde branche (232), et le second dispositif d'entraînement de fluide (224) est configuré pour entraîner le fluide dans le second réservoir de nettoyage (22) à circuler dans la seconde branche (232) ; et
dans laquelle la station de base de maintenance (100) comprend en outre une carte de circuit imprimé (30) et un premier composant de communication (31) connecté électriquement à la carte de circuit imprimé (30), la carte de circuit imprimé (30) est fixée à la base, la carte de circuit imprimé (30) est connectée électriquement au premier dispositif d'entraînement de fluide (124) et au second dispositif d'entraînement de fluide (224), et le premier composant de communication (31) est configuré pour communiquer avec le robot de nettoyage (200) pour obtenir des informations prédéfinies de demande de fluide de nettoyage, la carte de circuit imprimé (30) détermine un premier paramètre de fonctionnement et un second paramètre de fonctionnement en fonction des informations prédéfinies de demande de fluide de nettoyage reçues par le premier composant de communication (31), pour commander le premier dispositif d'entraînement de fluide (124) en fonction du premier paramètre de fonctionnement, et pour commander le second dispositif d'entraînement de fluide (224) en fonction du second paramètre de fonctionnement.

2. Station de base de maintenance (100) selon la revendication 1, dans laquelle le premier dispositif d'entraînement de fluide (124) est un premier dispositif de pompage de fluide, et le premier dispositif d'entraînement de fluide (124) est en communication pneumatique avec la première branche (231), ou le premier dispositif d'entraînement de fluide (124) est un premier dispositif de pompe à air, et le premier dispositif d'entraînement de fluide (124) est en communication pneumatique avec le premier réservoir de nettoyage (21).

3. Station de base de maintenance (100) selon la revendication 1, dans laquelle le second dispositif d'entraînement de fluide (224) est un second dispositif de pompage de fluide, et le second dispositif d'entraînement de fluide (224) est en communication pneumatique avec la seconde branche (232), ou le second dispositif d'entraînement de fluide (224) est un second dispositif de pompe à air, et le second dispositif d'entraînement de fluide (224) est en communication pneumatique avec le second réservoir de nettoyage (22).

4. Station de base de maintenance (100) selon la revendication 1, dans laquelle le ou les dispositifs d'entraînement de fluide (24) comprennent un dispositif de pompage de liquide en communication pneumatique avec le tuyau principal (233), et le dispositif de pompage de liquide est configuré pour entraîner le fluide dans le premier réservoir de nettoyage (21) et le fluide dans le second réservoir de nettoyage (22) à circuler respectivement dans la première branche (231) et la seconde branche (232), un rapport d'une surface transversale de la première branche (231) à une surface transversale de la seconde branche (232) satisfaisant un rapport prédéfini de débit de fluide de nettoyage.

5. Station de base de maintenance (100) selon la revendication 1, dans laquelle la base est pourvue d'une première rainure de montage (11) et d'une seconde rainure de montage (12), le premier réservoir de nettoyage (21) et le second réservoir de nettoyage (22) sont respectivement montés de façon détachable dans la première rainure de montage (11) et dans la seconde rainure de montage (12), un premier orifice de drainage (13) est formé sur une paroi de rainure de la première rainure de montage (11) et communique avec le premier réservoir de nettoyage (21), et la première branche (231) communique avec le premier réservoir de nettoyage (21) par l'intermédiaire du premier orifice de drainage (13) ; un second orifice de drainage (14) est formé sur une paroi de rainure de la seconde rainure de montage (12) et communique avec le second réservoir de nettoyage (22), et la seconde branche (232) communique avec le second réservoir de nettoyage (22) par l'intermédiaire du second orifice de drainage (14).

6. Système de robot de nettoyage (200), comprenant un robot de nettoyage (200) et une station de base de maintenance (100) ; dans lequel la station de base de maintenance (100) est configurée pour entretenir un robot de nettoyage (200) et comprend :
une base (10) ; et
un système d'alimentation en liquide de nettoyage (20), comprenant : un premier réservoir de nettoyage (21), un second réservoir de nettoyage (22), un ensemble conduite (23) et au moins un dispositif d'entraînement de fluide (24) ;
dans lequel le premier réservoir de nettoyage (21), le second réservoir de nettoyage (22) et le ou les dispositifs d'entraînement de fluide (24) sont montés sur la base (10) ; l'ensemble conduite (23) est muni d'un tuyau principal (233), d'une première branche (231) et d'une seconde branche (232) ; le tuyau principal (233) est configuré pour fournir un fluide de nettoyage au robot de nettoyage (200), une extrémité de la première branche (231) est reliée au premier réservoir de nettoyage (21), une extrémité de la seconde branche (232) est reliée au second réservoir de nettoyage (22), une extrémité de la première branche (231) éloignée du premier réservoir de nettoyage (21) et une extrémité de la seconde branche (232) éloignée du second réservoir de nettoyage (22) sont reliées à une extrémité du tuyau principal (233), et le ou les dispositifs d'entraînement de fluide (24) sont configurés pour entraîner un fluide dans le premier réservoir de nettoyage (21) et un fluide dans le second réservoir de nettoyage (22) à circuler dans la première branche (231) et dans la seconde branche (232) respectivement ; et le fluide dans le premier réservoir de nettoyage (21) et le fluide dans le second réservoir de nettoyage (22) sont complètement mélangés dans le tuyau principal (233) pour former une certaine proportion de liquide de nettoyage ; **caractérisé en ce que**
la station de base de maintenance (100) comprend une carte de circuit imprimé (30) et un premier composant de communication (31) connecté électriquement à la carte de circuit imprimé (30), et la carte de circuit imprimé (30) est connectée électriquement au ou aux dispositifs d'entraînement de fluide (24) ;
le robot de nettoyage (200) comprend en outre un contrôleur (39) et un second composant de communication (42) connecté électriquement au contrôleur (39) ; et
lorsque le robot de nettoyage (200) est accueilli dans la station de base de maintenance (100), le contrôleur (39) commande le second composant de communication (42) pour envoyer des informations prédéfinies de demande de fluide de nettoyage au premier composant de communication (31) de la station de base de maintenance (100), et la carte de circuit imprimé (30) détermine un paramètre de fonctionnement en fonction des informations prédéfinies de demande de fluide de nettoyage reçues par le premier composant de communication (31), et commande le fonctionnement du ou des dispositifs d'entraînement de fluide (24) en fonction du paramètre de fonctionnement ;
dans lequel le ou les dispositifs d'entraînement de fluide (24) comprennent un premier dispositif d'entraînement de fluide (124) et un second dispositif d'entraînement de fluide (224), le premier dispositif d'entraînement de fluide (124) est en communication pneumatique avec le premier réservoir de nettoyage (21) ou la première branche (231), le second dispositif d'entraînement de fluide (224) est en communication pneumatique avec le second réservoir de nettoyage (22) ou la seconde branche (232), la carte de circuit imprimé (30) détermine un premier paramètre de fonctionnement et un second paramètre de fonctionnement en fonction des informations prédéfinies de demande de fluide de nettoyage reçues par le premier composant de communication (31), commande le premier dispositif d'entraînement de fluide (124) en fonction du premier paramètre de fonctionnement, et commande le second dispositif d'entraînement de fluide (224) en fonction du second paramètre de fonctionnement.

7. Système de robot de nettoyage (200) selon la revendication 6, dans lequel le robot de nettoyage (200) est pourvu d'un récipient de nettoyage (37) et d'une vanne d'accueil (38) en communication pneumatique avec le récipient de nettoyage (37), et la vanne d'accueil (38) est configurée pour communiquer avec le tuyau principal (233) de la station de base de maintenance (100).

8. Système de robot de nettoyage (200) selon la revendication 6, dans lequel le robot de nettoyage (200) comprend en outre un dispositif de détection de quantité d'eau (41) connecté électriquement au contrôleur (39), le dispositif de détection de quantité d'eau (41) est configuré pour détecter un état de quantité d'eau du récipient de nettoyage (37), et le contrôleur (39) détermine les informations prédéfinies de demande de liquide de nettoyage en fonction d'un signal de détection du dispositif de détection de quantité d'eau (41).

9. Système de robot de nettoyage (200) selon la revendication 6, dans lequel les informations prédéfinies de demande de liquide de nettoyage comprennent des exigences de nettoyage léger, des exigences de nettoyage modéré ou des exigences de nettoyage approfondi,
lorsque les informations prédéfinies de demande de liquide de nettoyage sont définies pour inclure des exigences de nettoyage approfondi, les informations prédéfinies de demande de liquide de nettoyage peuvent donner l'instruction à la station de base de maintenance de configurer une première concentration de fluide de nettoyage pour la tâche de nettoyage du robot de nettoyage ;
lorsque les informations prédéfinies de demande de liquide de nettoyage sont définies pour inclure des exigences de nettoyage modéré, les informations prédéfinies de demande de liquide de nettoyage peuvent donner l'instruction à la station de base de maintenance de configurer une deuxième concentration de fluide de nettoyage pour la tâche de nettoyage du robot de nettoyage ;
lorsque les informations prédéfinies de demande de liquide de nettoyage sont définies pour inclure des exigences de nettoyage léger, les informations prédéfinies de demande de liquide de nettoyage peuvent donner l'instruction à la station de base de maintenance de configurer une troisième concentration de fluide de nettoyage pour la tâche de nettoyage du robot de nettoyage,
et la deuxième concentration est inférieure à la première concentration, la troisième concentration est inférieure à la deuxième concentration.

10. Système de robot de nettoyage (200) selon la revendication 6, dans lequel le robot de nettoyage (200) est pourvu d'un récipient de nettoyage (37) et d'une vanne d'accueil (38) en communication pneumatique avec le récipient de nettoyage (37) ; la station de base de maintenance (100) comprend en outre un mécanisme d'accueil (40) en communication avec le tuyau principal (233), et le mécanisme d'accueil (40) est configuré pour accueillir la vanne d'accueil (38) du robot de nettoyage (200) pour établir un passage de fluide (34) faisant communiquer le récipient de nettoyage (37) et le tuyau principal (233).
